# EUROPEAN PATENT SPECIFICATION

(11) **EP 2 394 776 B1**
(45) Date of publication and mention of the grant of the patent: **05.11.2014**
(21) Application number: 10195595.3
(22) Date of filing: 17.12.2010
(51) Int. Cl.: B23K 37/04, B23K 37/047, B25B 5/16, B62D 65/00, B23K 11/11

(54) **Welding station for vehicle metal sheet body components using magnetic fixing means ; Industrial Plant with such welding station**
Schweißstation für Fahrzeugmetallblechkarosseriekomponenten mit magnetischen Halterungen ; Industrielle Herstellungsgebäude mit solcher Schweißstation
Station de soudage pour des composants réalisés en tôle métallique avec des moyens de fixation magnétiques ; Usine industrielle avec une telle station de soudage

(30) Priority: 10.06.2010 EP 10165586
(43) Date of publication of application: 14.12.2011
(73) Proprietor: C.R.F. Società Consortile per Azioni, 10043 Orbassano (Torino) (IT)
(72) Inventor: Lai, Manuel, 10043, ORBASSANO (IT); Eytan, Amit Aharon, 10043, ORBASSANO (IT)
(74) Representative: Bergadano, Mirko

(56) References cited:
- DE-A1- 10 021 873
- DE-U1-202008 003 143
- FR-A- 1 172 918
- KR-A- 20090 106 218
- US-A1- 2002 121 506

## Description

The present invention relates to a welding station for vehicle metal sheet body components, in particular motor vehicle body components, according to the preamble of claim 1 (see, for example, DE 20 2008 003143 U1).

### STATE OF THE ART

An industrial plant of a known type for the production of vehicles, in particular motor vehicles, is generally provided with a plurality of welding stations or units, where the components of the vehicle normally designated by the term of "subassemblies", formed by joining a number of parts that are normally obtained by pressing of sheet steel, are assembled and welded.

A type of welding station is, for example, the so-called completion station, also known as re-spot welding station, in which a tack-welded component, i.e., a component the parts of which are held together by welding spots previously applied by means of tack welding, which has the purpose of defining the final geometry of the component, is subjected to a procedure of completion by means of spot welding, designed to consolidate together the individual parts guaranteeing them the required performance and mechanical characteristics.

A completion station of a known type normally comprises a base and a plurality of supporting members, which are mounted on the base for supporting the component to be welded and are provided with fixing means designed to hold the component itself in position with respect to the base. In general, the fixing means referred to are constituted by mechanical gripping devices, preferably pneumatically operated clamps, which are distributed over the base, by means of the corresponding supporting members, in positions sufficiently close to one another to enable the correct position of the component to be stably maintained during welding.

DE 20 2008 003143 U1 discloses a machining system (3) comprising one or more machining stations, each equipped with at least one laser machining device having at least one laser head and a supporting device, wherein the laser head is arranged on a movement unit having a mobility limited within potential movement options thereof, and is operable to generate a laser beam also having a limited operating region. The laser machining device has a movable handling device for one or more work pieces. The handling device and movement unit can be jointly controlled.

US 2002/121506 A1 discloses welding of two or more steel sheets, at least one of which has a protective layer of a material with a low vaporization temperature, which welding is carried out by directing a laser beam on two overlapped flanges of the sheets, which are clamped in position during welding by means of clamping devices. These clamping devices are able to hold the flanges to be welded in a slightly spaced apart position from each other, so as to create a gap, which does not jeopardize the possibility of carrying out the welding while enabling evacuation of the vapours of the protective material, which are generated during welding.

KR 2009 0106218 discloses a panel clamping device to reduce the equipment trouble in a factory which manufactures vehicle body by comprising to clamp a panel using a link member and a magnetic device. A panel clamping apparatus comprises a base, fixing pin, a fixing link, and a link member. The fixing pin prevents the horizontal flow of the panel arranged as protruded on the base. The fixing prevention link prevents the vertical direction movement of the panel. The link member circulates the fixing link as combined with the fixing link by hinge combination.

FR 1 172 918 discloses a device for fastening pieces to be welded or repaired provided with adjustable articulated arms which carry permanent magnets.

### DESCRIPTION OF THE INVENTION

According to what the present applicant has been able to find in his own experience, a completion station according to the known art described above normally suffers from certain drawbacks mainly deriving from the fact that the mechanical gripping devices such as the pneumatically operated clamps have relatively large overall dimensions, which cause difficulties of fast access to the areas of welding by the welding guns and are moreover considerably complex from the mechanico-structural standpoint. Said encumbrance and complexity result in relatively long times for carrying out the welding operations, with consequent relatively high production and maintenance costs. Furthermore, the completion stations that use mechanical gripping devices normally have a poor flexibility of configuration as the geometry of the component to be welded varies.

The aim of the present invention is to provide a welding station for vehicle metal sheet body components, said station being able to overcome, in an efficient and economically advantageous way, the drawbacks described above.

Provided according to the present invention is a welding station for metal sheet body components, according to claim 1.

### BRIEF DESCRIPTION OF THE DRAWINGS

The invention will now be described with reference to the annexed drawings, which illustrate a non-limiting example of embodiment thereof, wherein:
- Figure 1 illustrates a preferred embodiment of the welding station of the present invention;
- Figure 2 illustrates, at an enlarged scale, a detail of Figure 1.

### PREFERRED EMBODIMENTS OF THE INVENTION

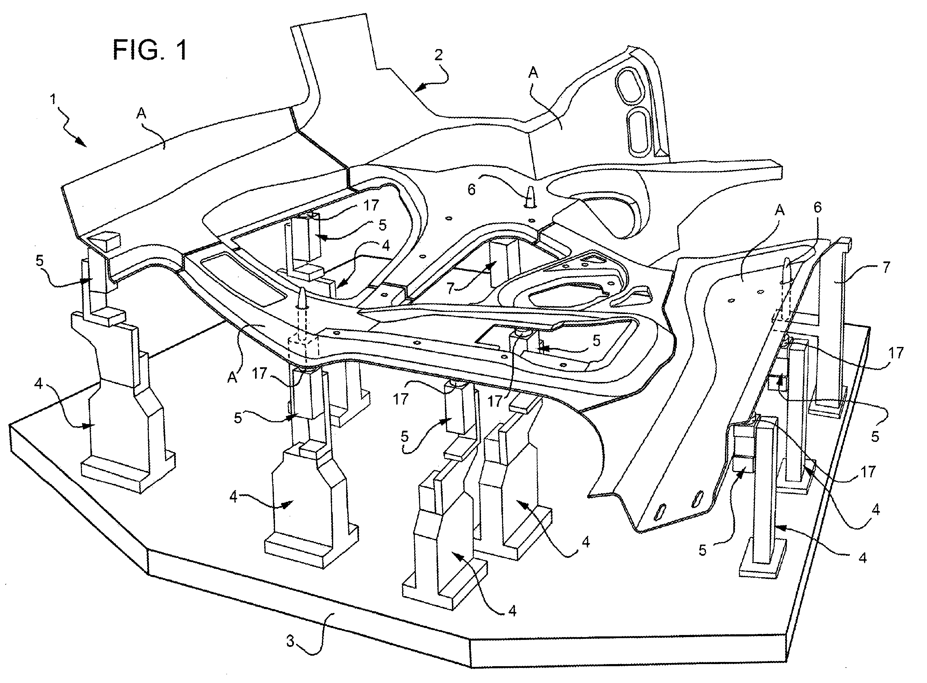

With reference to Figure 1, designated as a whole by 1 is a welding or completion station for a metal sheet body component 2 of a motor vehicle. In particular, the component 2 is constituted by a plurality of pressed sheet-steel parts A held together provisionally by welding spots (not illustrated) applied in a preceding so-called "tack-welding station". In the welding station 1, the component 2 is subjected to a procedure of spot welding, which is performed by means of welding guns (of a known type and not illustrated) and has the function of connecting together the parts A of the component 2 together definitively.

The welding station 1 comprises a base 3 and a plurality of supporting members 4, which are removably mounted on the base 3 and have the function of supporting the component 2 in a given position with respect to the base 3 and holding it with respect to the base 3 itself in this position.

For this purpose, each supporting member 4 comprises one or more fixing devices 5, which, as will be explained in detail in what follows, are fixing devices of a magnetic type.

The number and position of the supporting members 4 and of the fixing devices 5 are a function of the geometry of the component 2 to be welded and are such as to define, for the component 2, a welding workstation proper, the dual function of which is to block the parts A in their correct relative spatial positions and to enable ease of introduction of the welding guns.

To guarantee correct positioning of the component 2 on the supporting members 4, the welding station 1 further comprises centring pins 6, each of which is removably connected to the base 3 by means of a respective support 7 and slidably engages a corresponding opening made through the component 2.

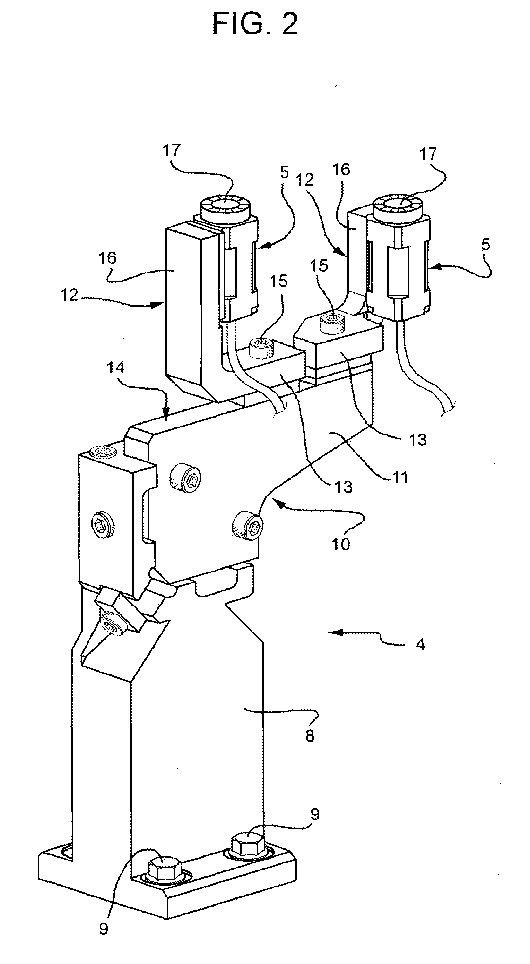

According to the present invention and to what is illustrated in Figure 2, a generic supporting member 4 comprises an upright 8, which is fastened on the base 3 with screws 9 and supports a head 10 comprising a plate 11, which is set sideways on and can be adjusted in position in a vertical plane with respect to the upright 8. The head 10 further comprises two L-shaped brackets 12, one arm 13 of which, set horizontally, extends in contact with a top surface 14 of the plate 11 and is fixed in an angularly adjustable way, to the plate 11 via a screw 15 with vertical axis. Each bracket 12 comprises a further arm 16, which extends vertically and perpendicular to the top surface 14 and carries, connected thereto, a respective magnetic fixing device 5, which projects above the upper end of the respective arm 16 and comprises, at its own top end, a contact element 17 set, in use, in contact with the surface of the component 2 facing the base 3.

Advantageously, the magnetic fixing device 5 can be either an electromagnet with concentric poles or a permanent magnet, and is controlled electromechanically, hydraulically or pneumatically to pass from a fixing operative state to a releasing rest state. The position of each magnetic fixing device 5 with respect to the corresponding upright 8 can be adjusted so as to be adapted to the shape of the component 2, either by turning the corresponding bracket 12 about the vertical axis of the corresponding screw 15, or by displacing the corresponding bracket 12 axially by interposition of shims (not illustrated) between the bracket 12 itself and the plate 11.

Furthermore, to enable the fixing device 5 to adapt perfectly to the shape of the component 2, said fixing device 5 can be inclined with respect to the upright 8 by turning the corresponding plate 11 about an axis perpendicular to the plane of lie of the plate 11 itself.

From the foregoing it emerges that the use of the magnetic fixing devices 5 enables, unlike what occurs when pneumatically operated clamps or the like are used, the surface of the component 2 opposite to the one facing the base 3 to be kept completely free, thus facilitating any displacement of the welding guns, with consequent reduction of the production times.

## Claims

1. welding station (1) operable to spot-weld motor vehicle metal sheet body components (2) previously tack-welded in a tack-welding station; the welding station (1) comprising a base (3) and a plurality of supporting members (4) mounted on the base (3) to support, during operation, the motor vehicle metal sheet body components (2) to be spot-welded; the supporting members (4) comprising fixing means (5) designed to hold the motor vehicle metal sheet body components (2) in position with respect to the base (3); the fixing means (5) comprising magnetic fixing devices (5) electromechanically, hydraulically, or pneumatically controllable to switch from a fixing state to a releasing state; **characterised by** each fixing device (5) comprising a contact element (17) arranged, during operation, in contact with the surface of the motor vehicle metal sheet body components (2) facing the base (3); each fixing device (5) comprising either a concentric pole electromagnet or an electromechanically, hydraulically, or pneumatically controlled permanent magnet; each supporting member (4) comprising an upright (8) removably connected to the base (3); a head (10) supported on an upper end of the upright (8) and comprising a plate (11) set sideways on and adjustable in position in a vertical plane with respect to the upright (8), and two facing L-shaped brackets (12) each comprising a first arm (13) removably connected to a top surface (14) of the plate (11) and angularly adjustable about an axis perpendicular to the top surface (14) of the plate (11), and a second arm (16) perpendicular to the first arm (13) and carrying a fixing device (5), which is axially adjustable along the second arm (16) to project above an upper end of the second arm (16) and comprises, at its own top end, a contact element (17) which, during operation, is in contact with the motor vehicle metal sheet body components (2).

2. An industrial plant for the production of vehicles comprising a welding station (1) as claimed in the preceding claim.

## Patentansprüche

1. Schweißstation (1), die betätigbar ist, um Punktschweißungen bei Metallblech-Karosseriebauteilen (2) für Kraftfahrzeuge durchzuführen, bei denen vorher eine Heftschweißung in einer Heft-Schweißstation durchgeführt worden ist, wobei die Schweißstation (1) eine Basis (3) und eine Vielzahl von Tragteilen (4) aufweist, die an der Basis (3) angebracht sind, um während des Betriebes die Metallblech-Karosseriebauteile (2) für Kraftfahrzeuge abzustützen, bei denen Punktschweißungen vorzunehmen sind; wobei die Tragteile (4) Fixierungseinrichtungen (5) aufweisen, die dazu ausgelegt sind, die Metallblech-Karosseriebauteile (2) für Kraftfahrzeuge gegenüber der Basis (3) in ihrer Position zu halten; wobei die Fixierungseinrichtungen (5) magnetische Fixierungseinrichtungen (5) aufweisen, die elektromechanisch, hydraulisch oder pneumatisch steuerbar sind, um zwischen einem Fixierungszustand und einem gelösten Zustand umzuschalten,
**dadurch gekennzeichnet,**
**dass** jede Fixierungseinrichtung (5) ein Kontaktelement (17) aufweist, das während des Betriebes in Kontakt mit der Oberfläche der Metallblech-Karosseriebauteile (2) für Kraftfahrzeuge angeordnet ist, welche der Basis (3) gegenüberliegen;
**dass** jede Fixierungseinrichtung (5) entweder einen Elektromagneten mit konzentrischem Pol oder einen elektromechanisch, hydraulisch oder pneumatisch gesteuerten Permanentmagneten aufweist;
**dass** jedes Tragteil (4) einen Ständer (8) aufweist, der lösbar mit der Basis (3) verbunden ist;
**dass** ein Kopf (10) vorgesehen ist, der an einem oberen Ende des Ständers (8) gelagert ist und eine Platte (11), die seitlich an und einstellbar in ihrer Position in einer vertikalen Ebene bezüglich des Ständers (8) angebracht ist, sowie zwei gegenüberliegende L-förmige Träger (12) aufweist, die jeweils folgendes aufweisen: einen ersten Arm (13), der lösbar verbunden ist mit einer oberen Oberfläche (14) der Platte (11) und winkelmäßig einstellbar ist um eine Achse senkrecht zu der oberen Oberfläche (14) der Platte (11), sowie einen zweiten Arm (16), der senkrecht zu dem ersten Arm (13) angeordnet ist und eine Fixierungseinrichtung (5) trägt, welche längs des zweiten Armes (16) axial einstellbar ist, so dass sie über ein oberes Ende des zweiten Armes (16) vorsteht und, an ihrem eigenen oberen Ende, ein Kontaktelement (17) aufweist, welches während des Betriebes mit den Metallblech-Karosseriebauteilen (2) des Kraftfahrzeugs in Kontakt steht.

2. Industrieanlage für die Herstellung von Fahrzeugen,
die eine Schweißstation (1) gemäß dem vorhergehenden Anspruch aufweist.

## Revendications

1. Poste de soudage (1) opérationnel pour souder par points des composants de corps (2) de feuille métallique de véhicule automobile précédemment soudés par pointage dans un poste de soudage par pointage ; le poste de soudage (1) comprenant une base (3) et une pluralité d'éléments de support (4) montée sur la base (3) pour supporter, en fonctionnement, les composants de corps (2) de feuille métallique de véhicule automobile devant être soudés par points ; les éléments de support (4) comprenant des moyens de fixation (5) conçus pour maintenir les composants de corps (2) de feuille métallique de véhicule automobile en position par rapport à la base (3) ; les moyens de fixation (5) comprenant des dispositifs de fixation magnétiques (5) commandables électroniquement, hydrauliquement ou pneumatiquement pour passer d'un état de fixation à un état de libération ; **caractérisé en ce que** chaque dispositif de fixation (5) comprend un élément de contact (17) agencé, en fonctionnement, en contact avec la surface des composants de corps (2) de feuille métallique de véhicule automobile faisant face à la base (3) ; chaque dispositif de fixation (5) comprend soit un électroaimant à pôle concentrique soit un aimant permanent commandé électromécaniquement, hydrauliquement ou pneumatiquement ; chaque élément de support (4) comprenant un montant (8) raccordé de façon amovible à la base (3) ; une tête (10) supportée sur une extrémité supérieure du montant (8) et comprenant une plaque (11) installée latéralement sur et ajustable en position dans un plan vertical par rapport au montant (8), et deux supports en forme de L se faisant face (12) comprenant chacune un premier bras (13) raccordé de façon amovible à une surface supérieure (14) de la plaque (11) et ajustable angulairement autour d'un axe perpendiculaire à la surface supérieure (14) de la plaque (11), et un second bras (16) perpendiculaire au premier bras (13) et portant un dispositif de fixation (5), qui est ajustable axialement le long du second bras (16) pour faire saillie au-dessus d'une extrémité de dessus du second bras (16) et comprend, au niveau de sa propre extrémité supérieure, un élément de contact (17) qui, en fonctionnement, est en contact avec les composants de corps (2) de feuille métallique de véhicule automobile.

2. Installation industrielle destinée à produire des véhicules comprenant un poste de soudage (1) selon la revendication précédente.
